# EUROPÄISCHE PATENTANMELDUNG

(11) **EP 3 480 914 A1**
(43) Veröffentlichungstag der Anmeldung: **08.05.2019**
(21) Anmeldenummer: 17200188.5
(22) Anmeldetag: 06.11.2017
(51) Int. Cl.: H02J 3/32, H02J 9/06

(54) **BEREITSTELLUNG VON REGELLEISTUNG FÜR EIN STROMNETZ MIT EINER EINE LITHIUMIONENBATTERIE AUFWEISENDEN USV**

(71) Anmelder: Piller Group GmbH, 37520 Osterode am Harz (DE)
(72) Erfinder: Seidel, Detlev, 37085 Göttingen (DE); Klauenberg, Armin, 37520 Osterode (DE)
(74) Vertreter: REHBERG HÜPPE + PARTNER

(57) **Zusammenfassung**

Beim Betreiben einer einen für viele Teilladungs-/-entladungszyklen geeigneten Energiespeicher (4) aufweisenden USV (1) wird die USV (1) zwischen ein Stromnetz (2) und eine elektrische Last (3) geschaltet. In dem Energiespeicher(4) wird elektrische Energie gespeichert, wobei die in dem Energiespeicher (4) gespeicherte elektrische Energie mindestens so groß wie eine vorgegebene Minimalenergie, um eine elektrische Last (3) für einen vorgegebenen Mindestzeitraum mit einer vorgegebenen elektrischen Mindestleistung zu versorgen, und bei Ausfall des Stromnetzes (2) wird der Energiespeicher (4) entladen, um die Last (3) mit elektrischer Leistung zu versorgen. Der Energiespeicher (4) wird so dimensioniert, dass er zum Speichern einer Maximalenergie geeignet ist, die mindestens zweimal so groß ist wie die Minimalenergie, und in dem Energiespeicher (4) wird eine Anfangsenergie gespeichert, die mindestens zweimal so groß ist wie die Minimalenergie. Um positive Regelleistung für das Stromnetz (2) bereitzustellen, wird der Energiespeicher (4) entladen, aber nicht unter die Minimalenergie.

## Beschreibung

### TECHNISCHES GEBIET DER ERFINDUNG

Die Erfindung betrifft ein Verfahren zum Betreiben einer einen Energiespeicher aufweisenden USV mit den Merkmalen des Oberbegriffs des unabhängigen Patentanspruchs 1 sowie eine USV mit einem Energiespeicher und den weiteren Merkmalen des Oberbegriffs des unabhängigen Patentanspruchs 6.

Unter einer USV wird gemeinhin - und so auch hier - eine Vorrichtung zur unterbrechungsfreien Stromversorgung verstanden. Dabei bedeutet, dass die Stromversorgung unterbrechungsfrei ist, dass die Stromversorgung auch bei Ausfall eines übergeordneten Stromnetzes zumindest so lange gewährleistet wird, bis eine Last, die mit der USV abgesichert ist, kontrolliert heruntergefahren ist. Zudem kann die USV eine Energiequelle, wie beispielsweise einen Dieselgenerator oder eine andere Energiequelle mit einer Verbrennungsmaschine und einer elektrischen Maschine, die auch als Genset bezeichnet wird, oder irgendeine andere Energiequelle aufweisen, mit der langfristig elektrische Energie zur Versorgung der Last bereitgestellt werden kann.

### STAND DER TECHNIK

Aus der US 6,906,933 B2 ist eine USV bekannt, die einen Wechselstromeingang zum Anschluss an ein Stromnetz und einen Wechselstromausgang zum Anschluss einer Last aufweist. Zwischen den Wechselstromeingang und den Wechselstromausgang sind ein AC/DC-Wandler und ein DC/AC-Wandler in Reihe geschaltet. An den zwischen dem AC/DC-Wandler und dem DC/AC-Wandler ausgebildeten Gleichspannungszwischenkreis ist ein Energiespeicher in Form einer Batterie über einen DC/DC-Wandler angeschlossen. Parallel zu der Reihenschaltung aus dem AC/DC-Wandler und dem DC/AC-Wandler verbindet ein Bypass den AC-Eingang und den AC-Ausgang, wobei in dem Bypass ein Trennschalter angeordnet ist. Eine Steuerung der USV steuert den AC/DC-Wandler abhängig von Strom und Spannung, die über den AC-Anschluss fließen bzw. an diesem anliegen, an, um den über den AC-Eingang fließenden Strom zu regeln, insbesondere um bei geschlossenem Trennschalter in dem Bypass eine Blindleistungskompensation durchzuführen.

Aus der EP 1 723 712 B1 ist eine USV bekannt, bei der zwischen einem Netzanschluss und einem Lastanschluss ein AC/DC-Wandler und ein DC/AC-Wandler in Reihe geschaltet sind. An einen zwischen dem AC/DC-Wandler und dem DC/AC-Wandler ausgebildeten Zwischenkreis ist eine Hilfs-DC-Leistungsquelle angeschlossen. Der AC/DC-Wandler und der DC/AC-Wandler werden beide so angesteuert, dass die über den Netzanschluss und den Lastanschluss fließenden Ströme konditioniert werden. Parallel zu der Reihenschaltung aus dem AC/DC-Wandler und dem DC/AC-Wandler ist auch hier ein Bypass mit einem Trennschalter vorgesehen. In einem Betriebsmodus ist der Netzanschluss dieser bekannten USV von einem im Regelfall an den Netzanschluss angeschlossenen Stromnetz durch Öffnen eines Netzschalters getrennt, und auch der Trennschalter in dem Bypass ist geöffnet. Der DC/AC-Wandler wird dann angesteuert, um eine an den Lastanschluss angeschlossene elektrische Last mit elektrischer Leistung zu versorgen, und der bidirektionale AC/DC-Wandler wird so angesteuert, um eine weitere direkt an den Netzanschluss angeschlossene elektrische Last mit elektrischer Leistung zu versorgen.

Die beiden oben beschriebenen USV sind sogenannte statische USV ohne bewegliche Teile. Daneben sind sogenannte rotierende USV bekannt, bei denen an einen Anzapf einer zwischen ein Wechselstromnetz und eine Last geschalteten Drossel eine von zwei getrennten Wicklungen einer rotierenden elektrischen Maschine angeschlossen ist. An die andere Wicklung der rotierenden elektrischen Maschine kann eine Batterie über einen DC/AC-Wandler oder ein Generator, dessen Rotor von einem Schwungrad oder einer Brennkraftmaschine angetrieben wird, über einen AC/AC-Wandler angeschlossen sein, die als Energiespeicher bzw. Energiequelle für eine dauerhafte Stromversorgung dienen.

Aus der WO 2013/041534 A2 ist ein Verfahren zum Steuern einer an ein Wechselstromnetz angeschlossenen Photovoltaikanlage mit einem Photovoltaikgenerator und einem Wechselrichter bekannt. Dabei wird mit dem Wechselrichter in Abhängigkeit von einem empfangenen Leistungsregelsignal elektrische Leistung zwischen dem Photovoltaikgenerator und dem Wechselstromnetz transferiert, die positive und negative dynamische Regelleistung umfasst. Der Photovoltaikgenerator ist über einen DC/DC-Wandler an einen eingangsseitigen Gleichspannungszwischenkreis des Wechselrichters angeschlossen, an den weiterhin eine Batterie über einen bidirektionalen DC/DC-Wandler als Batterieinverter angeschlossen ist. Mithilfe der Batterie kann über den Wechselrichter unabhängig von der Einspeisung von elektrischer Leistung von dem Photovoltaikgenerator positive Regelleistung für das Wechselstromnetz bereitgestellt werden. Die Batterie wird mit elektrischer Leistung aus dem Photovoltaikgenerator oder dem Wechselstromnetz aufgeladen und aufgeladen gehalten, bis positive Regelleistung benötigt wird. Dann wird die in der Batterie zwischengespeicherte elektrische Leistung über den Batterieinverter und den Wechselrichter in das Wechselstromnetz eingespeist.

Aktuelle Batterien mit hoher Speicherdichte, beispielsweise Lithiumionenbatterien, stellen zwar eine bestimmte elektrische Leistung für einen vergleichsweise langen Zeitraum und damit eine hohe Maximalenergie zur Verfügung. Verglichen mit dieser hohen Maximalenergie ist aber die maximale elektrische Leistung, mit der diese Maximalenergie abgerufen werden kann, nur klein. Dies hat zur Folge, dass bei der Ausstattung einer USV, die eine vergleichsweise hohe elektrische Leistung von beispielsweise 100 kW nur für eine begrenzte Zeit von beispielsweise 20 Sekunden bereitstellen muss, bis von ihr abgesicherte Lasten kontrolliert herunter gefahren sind oder ein Notstromaggregat in Form eines Dieselgenerators die Stromversorgung übernimmt, mit einer Lithiumionenbatterie, die in der Lithiumionenbatterie maximal speicherbare Energie nicht benötigt wird. Anders gesagt muss die USV mit einer bezogen auf ihre Maximalenergie viel zu groß dimensionierten Lithiumionenbatterie ausgestattet werden, um die bei Netzausfall benötigte elektrische Leistung zuverlässig zur Verfügung zu stellen. Dies macht die Verwendung einer Lithiumionenbatterie bei einer USV unwirtschaftlich. So können die Vorteile von Lithiumionenbatterien, wie geringer Platzbedarf, eine Vielzahl von Teilladungs-/-entladungszyklen und dergleichen nicht wirtschaftlich ausgenutzt werden.

### AUFGABE DER ERFINDUNG

Der Erfindung liegt die Aufgabe zugrunde, ein Verfahren zum Betreiben einer einen Energiespeicher aufweisenden USV sowie eine entsprechende USV aufzuzeigen, die eine erheblich gesteigerte Funktionalität aufweisen und so einen wirtschaftlichen Betrieb der USV auch mit Energiespeichern ermöglichen, die bislang für eine USV nicht wirtschaftlich einsetzbar waren.

### LÖSUNG

Die Aufgabe der Erfindung wird durch ein Verfahren zum Betreiben einer USV mit den Merkmalen des unabhängigen Patentanspruchs 1 und durch eine USV mit den Merkmalen des Patentanspruchs 6 gelöst. Bevorzugte Ausführungsformen des Verfahrens und der USV sind in den abhängigen Patentansprüchen definiert.

### BESCHREIBUNG DER ERFINDUNG

Das erfindungsgemäße Verfahren dient zum Betreiben einer USV, die einen für viele Teilladungs-/-entladungszyklen ausgebildeten Energiespeicher aufweist. Das Verfahren umfasst die Schritte des Schaltens der USV zwischen ein Stromnetz und eine elektrische Last, des Speicherns von elektrischer Energie in dem Energiespeicher, wobei die in dem Energiespeicher gespeicherte elektrische Energie mindestens so groß ist wie eine vorgegebene Minimalenergie, um eine elektrische Last für einen vorgegebenen Mindestzeitraum mit einer vorgegebenen elektrischen Mindestleistung zu versorgen, und des Entladens des Energiespeichers bei Ausfall des Stromnetzes, um die Last mit elektrischer Leistung zu versorgen. Dabei wird der Energiespeicher erfindungsgemäß gezielt so dimensioniert, dass er zum Speichern einer Maximalenergie geeignet ist, die mindestens zweimal so groß ist wie die Minimalenergie, die aber auch noch um ein vielfaches größer sein kann als die Minimalenergie, beispielsweise dreimal, fünfmal, zehnmal, zwanzigmal. In dem Energiespeicher wird dann eine Anfangsenergie gespeichert, die ebenfalls mindestens zweimal so groß ist wie die Minimalenergie, die aber nicht so groß sein muss, wie die Maximalenergie, wenn diese mehr als zweimal so groß ist wie die Minimalenergie. Der derart über die Minimalenergie hinaus aufgeladene Energiespeicher wird entladen, um positive Regelleistung für das Stromnetz bereitzustellen. Dabei wird der Energiespeicher jedoch nicht unter die Minimalenergie entladen, so dass diese Minimalenergie für die Versorgung der Last bei Ausfall des Stromnetzes weiterhin zur Verfügung steht.

Da bei dem erfindungsgemäßen Verfahren der Energiespeicher bezüglich der Maximalenergie gegenüber der Minimalenergie, die beim Ausfall des Stromnetzes zur Verfügung stehen muss, gezielt überdimensioniert, um die Regelleistung für das Stromnetz bereitstellen zu können, wird die bei Ausfall des Stromnetzes benötigte Mindestleistung auch bei Verwendung von beispielsweise Lithiumionenbatterien in wirtschaftlicher Weise realisiert. Die Erfindung kann auch so betrachtet werden, dass die Maximalleistung des Energiespeichers, die sich bei seiner Ausbildung durch beispielsweise Lithiumionenbatterien aufgrund der Anforderungen an elektrische Mindestleistung ergibt, und die weit über der typischen Minimalenergie für die jeweilige USV liegt, wirtschaftlich gemacht wird, indem sie für die Bereitstellung von Regelleistung für das Stromnetz genutzt wird. An solcher Regelleistung besteht ein steigender Bedarf infolge einer zunehmenden Anzahl von Windkraft- und Photovoltaikanlagen, die an die Stromnetze angeschlossen werden und nicht auf den aktuellen Bedarf abgestimmte schwankende Leistungen in die Stromnetze einspeisen. Entsprechend wird Regelleistung hoch vergütet. Mit dem Verkauf dieser Regelleistung kann der Betreiber einer USV die Mehrkosten für die hinsichtlich ihrer Maximalenergie für den Betrieb der USV überdimensionierte Lithiumionenbatterie zumindest kompensieren wenn nicht gar deutlich überkompensieren.

Der Wirtschaftlichkeitsvorteil des erfindungsgemäßen Verfahrens gegenüber dem normalen USV-Betrieb ergibt sich nicht nur bei Lithiumionenbatterien sondern grundsätzlich bei allen Energiespeichern, die verglichen mit der in ihnen speicherbaren Maximalenergie eine eher kleine maximale elektrische Leistung bereitstellen können und entsprechend bezüglich ihrer Maximalleistung sehr groß dimensioniert werden müssen, um die Versorgung einer elektrischen Last mit einer vorgegebenen elektrischen Mindestleistung zu garantieren.

Es wurde bereits angesprochen, dass der Energiespeicher bei dem erfindungsgemäßen Verfahren so ausgebildet werden kann, dass er zum Speichern einer Maximalenergie geeignet ist, die mindestens dreimal so groß ist wie die Minimalenergie. Dann kann in dem Energiespeicher eine Anfangsenergie gespeichert werden, die kleiner ist als die Maximalenergie, und der Energiespeicher kann anschließend weiter aufgeladen werden, um negative Regelleistung für das Stromnetz bereitzustellen. Dabei versteht sich, dass der Energiespeicher beim Bereitstellen von negativer Regelleistung nicht über die Maximalenergie hinaus aufgeladen wird, um seine Integrität nicht zu gefährden. Die Möglichkeit, auch negative Regelleistung bereitzustellen, ergibt sich insbesondere dann, wenn der Energiespeicher eine sehr viel größere Maximalenergie aufweist als die benötigte Minimalenergie.

Es versteht sich, dass der Energiespeicher, sobald er keine Regelleistung mehr bereitstellt, wieder auf seine Anfangsenergie aufzuladen bzw. zu entladen ist, um seine maximale Leistungsfähigkeit in Bezug auf positive und ggf. auch negative Regelleistung wieder herzustellen.

Das erfindungsgemäße Verfahren kann insbesondere so durchgeführt werden, dass der Energiespeicher beim Bereitstellen von positiver Regelleistung nicht unter eine Summe der Minimalenergie und einer Aufstartenergie entladen wird, wobei die Aufstartenergie zum Aufstarten einer zum Antreiben eines Generators der USV ausgebildeten Brennkraftmaschine ausreichend ist. Diese Aufstartenergie kann aber auch direkt in die Minimalenergie eingerechnet werden.

Die Regelleistung kann bei dem erfindungsgemäßen Verfahren abhängig von einem Regelleistungsanforderungssignal eines Netzbetreibers in das Stromnetz eingespeist werden. Dieses Regelleistungsanforderungssignal kann über einen separaten Signalübertragungsweg, bei dem es sich um ein drahtgebundenen oder einen drahtlosen Signalübertragungsweg handeln kann, an die USV übertragen werden. Das Regelleistungsanforderungssignal kann aber auch über das Stromnetz verbreitet werden, indem es beispielsweise der Wechselspannung des Stromnetzes aufmoduliert wird.

Es ist auch möglich, dass die Regelleistung bei dem erfindungsgemäßen Verfahren abhängig von Strom- und Spannungswerten am Netzanschluss der USV an das Stromnetz und von von einem Netzbetreiber vorgegebenen Kennlinien oder Statiken in das Stromnetz eingespeist wird. So kann der Bedarf an Regelleistung am Ort der USV festgestellt und befriedigt werden.

Eine erfindungsgemäße USV mit einem Netzanschluss, einem Lastanschluss, einem für viele Teilladungs-/-entladungszyklen ausgebildeten Energiespeicher und einer Steuerung, wobei der Energiespeicher so ausgebildet ist, dass er zum Speichern einer Minimalenergie geeignet ist, um eine elektrische Last für einen vorgegebenen Mindestzeitraum mit einer elektrischen Mindestleistung zu versorgen, ist dadurch gekennzeichnet, dass der Energiespeicher so dimensioniert ist, dass er zum Speichern einer Maximalenergie geeignet ist, die mindestens zweimal so groß ist wie die Minimalenergie, und dass die Steuerung zur Bereitstellung von Regelleistung für ein an den Netzanschluss angeschlossenes Stromnetz gemäß dem erfindungsgemäßen Verfahren ausgebildet ist.

Wie schon im Zusammenhang mit dem erfindungsgemäßen Verfahren ausgeführt, kann der Energiespeicher insbesondere so ausgebildet sein, dass er zum Speichern einer Maximalenergie geeignet ist, die mindestens dreimal so groß ist wie die Minimalenergie.

Die Steuerung kann einen Eingang aufweisen, der zum Empfang eines Regelleistungsanforderungssignals eines Netzbetreibers ausgebildet ist, damit die Steuerung die Regelleistung abhängig von dem Regelleistungsanforderungssignal des Netzbetreibers in das Stromnetz einspeisen kann.

Alternativ oder zusätzlich können Sensoren vorhanden sein, um Strom- und Spannungswerte des angeschlossenen Stromnetzes an den Netzanschluss zu erfassen, damit die Steuerung die Regelleistung abhängig von den Strom- und Spannungswerten und von von einem Netzbetreiber vorgegebenen Regelkennlinien in das Stromnetz einspeisen kann.

Der Energiespeicher der erfindungsgemäßen USV kann insbesondere an einen Gleichspannungszwischenkreis zwischen einem bidirektionalen netzanschluss-seitigen AC/DC-Wandler und einem lastanschluss-seitigen DC/AC-Wandler angeschlossen sein. Dabei kann dieser Anschluss insbesondere über einen bidirektionalen DC/DC-Wandler realisiert sein, der den Leistungsfluss in und aus dem Energiespeicher regelt.

Wie bereits angesprochen wurde, kann der Energiespeicher insbesondere eine Lithiumionenbatterie aufweisen. Alternativ oder zusätzlich kann der Energiespeicher auch eine andere Batterie oder einen anderen Speichertyp aufweisen. Das heißt, dass der Energiespeicher der erfindungsgemäßen USV auch mehrteilig aufgebaut sein kann, wobei seine Teile auf unterschiedlichen Technologien basieren können.

Die erfindungsgemäße USV kann aber nicht nur als statische USV, sondern auch als rotierende USV ausgebildet sein. So kann der Energiespeicher über einen bidirektionalen DC/AC-Wandler an eine von zwei getrennten Wicklungen einer rotierenden elektrischen Maschine angeschlossen sein, deren andere Wicklung an einen Anzapf einer Drossel mit einem Netzanschluss und einem Lastanschluss angeschlossen ist. In dieser Ausführungsform wird der DC/AC-Wandler von der Steuerung angesteuert, um die Regelleistung über den Netzanschluss in das Stromnetz einzuspeisen.

Als Notstromaggregat kann die erfindungsgemäße USV insbesondere einen Generator und einen zum Antreiben des Generators ausgebildete Brennkraftmaschine aufweisen. Insbesondere kann es sich dabei um einen sogenannten Dieselgenerator handeln. Der Generator kann dabei an den Gleichspannungszwischenkreis oder stattdessen direkt an den Lastanschluss angeschlossen sein. Wenn er an den Gleichspannungszwischenkreis angeschlossen ist, kann mithilfe des bidirektionalen AC/DC-Wandlers auch elektrische Leistung von dem Generator in das an den Netzanschluss angeschlossenen Stromnetz eingespeist werden, ohne dass auch der DC/AC-Wandler bidirektional ausgebildet sein muss.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Batterie die Rede ist, ist dies so zu verstehen, dass genau eine Batterie, zwei Batterien oder mehr Batterien vorhanden sind. Die in den Patentansprüchen angeführten Merkmale können durch andere Merkmale ergänzt werden oder die einzigen Merkmale sein, die das jeweilige Verfahren oder die jeweilige USV aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine erste Ausführungsform der erfindungsgemäßen USV als statische USV.
- **Fig. 2**: zeigt schematisch eine zweite Ausführungsform der erfindungsgemäßen USV als statische USV.
- **Fig. 3**: zeigt schematisch eine dritte Ausführungsform der erfindungsgemäßen USV als rotierende USV; und
- **Fig. 4**: ist ein Blockdiagramm einer Ausführungsform des erfindungsgemäßen Verfahrens.

### FIGURENBESCHREIBUNG

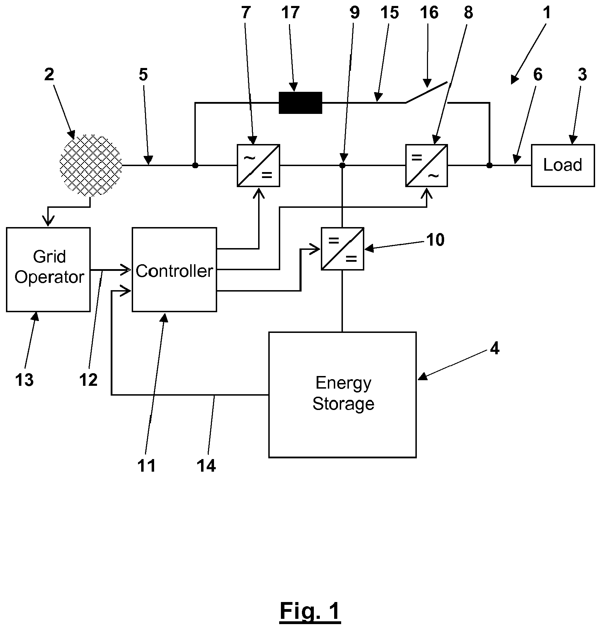

Die in **Fig. 1** schematisch dargestellte USV 1 ist zwischen ein Stromnetz 2 und eine elektrische Last 3 geschaltet, um die elastische Last 3 gegenüber Ausfällen des Stromnetzes 2 abzusichern. Die Absicherung besteht darin, dass die USV 1 die Last 3 für einen vorgegebenen Mindestzeitraum mit einer vorgegebenen elektrischen Mindestleistung versorgt, die ausreichend sind, um die Last 3 kontrolliert herunterzufahren. Die elektrische Leistung zur Versorgung der Last 3 bei Ausfall des Stromnetzes 2 bezieht die USV 1 aus einem Energiespeicher 4 für elektrische Energie. Dieser elektrische Energiespeicher 4 wird auf eine Minimalenergie aufgeladen und auf dieser Minimalenergie gehalten, die ausreichend ist, um die elektrische Last für den vorgegebenen Mindestzeitraum mit der vorgegebenen elektrischen Mindestleistung zu versorgen. Es versteht sich, dass der Energiespeicher 4 auch so ausgebildet sein muss, dass er zum Abgeben der vorgegebenen elektrischen Mindestleistung geeignet ist. Dies hat bei verschiedenen Typen von Energiespeichern, insbesondere bei bekannten Lithiumionenbatterien zur Folge, dass eine Maximalenergie, die in dem Energiespeicher 4 gespeichert werden kann, sehr viel höher ist als die Minimalenergie. Ohne diese Überdimensionierung in Bezug auf die Maximalenergie wäre die vorgegebene elektrische Mindestleistung nicht realisierbar. Die in Bezug auf die Minimalenergie überdimensionierte Maximalenergie des Energiespeichers 4 wird bei der erfindungsgemäßen USV 1 dazu genutzt, Regelleistung für das Stromnetz 2 bereitzustellen. Dazu wird der Energiespeicher 4 auf eine Anfangsenergie geladen, die zwischen der vorgegebenen Minimalenergie und seiner Maximalenergie liegt. Der Energiespeicher kann so Energie abgeben, um positive Regelleistung für das Stromnetz 2 bereitzustellen, ohne unter die Minimalenergie entladen zu werden, und weiter aufgeladen werden, um negative Regelleistung oder Stromnetz 2 bereitzustellen, ohne über seine Maximalenergie aufgeladen zu werden.

Konkret weist die USV 1 gemäß Fig. 1 zwischen einem Netzanschluss 5 und einem Lastanschluss 6 eine Reihenschaltung aus einem bidirektionalen AC/DC-Wandler 7 und einem DC/AC-Wandler 8 auf. An einen Gleichspannungszwischenkreis 9 zwischen den AC/DC-Wandler 7 und dem DC/AC-Wandler 8 ist der Energiespeicher 4 über einen bidirektionalen DC/DC-Wandler 10 angeschlossen. Eine Steuerung 11 der USV 1 steuert die Wandler 7, 8 und 10 abhängig von einem Regelleistungsanforderungssignal 12 von einem Netzbetreiber 13 sowie auch abhängig von einem Ladezustandssignal 14 an, das den Ladezustand des Energiespeichers 4 anzeigt. Der Netzbetreiber 13 erfasst den Zustand des Stromnetzes 2, um das Regelleistungsanforderungssignal 12 in passender Weise zu generieren. Das Regelleistungsanforderungssignal 12 kann über positive und/oder negative Wirkregelleistung hinaus auch Blindregelleistung von der USV 1 anfordern. Die USV 1 umfasst hier zusätzlich einen Bypass 15, der zwischen dem Netzanschluss 5 und dem Lastanschluss 6 parallel zu der Reihenschaltung aus dem AC/DC-Wandler 7 und dem DC/AC-Wandler 8 geschaltet ist. In dem Bypass 15 sind ein Trennschalter 16 und eine Entkopplungsdrossel 17 vorgesehen. Die USV 1 kann die Regelleistung sowohl bei geöffneten als auch bei geschlossenem Trennschalter 16 in das Stromnetz 2 einspeisen.

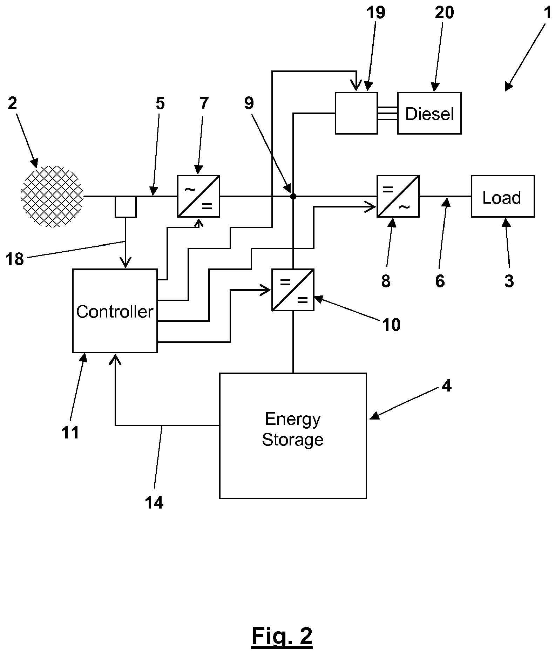

Die in **Fig. 2** dargestellte Ausführungsform der USV 1 unterscheidet sich von derjenigen gemäß Fig. 1 in folgenden Details, wobei jedoch nicht alle dieser Unterschiede vorhanden sein müssen. So kann der in Fig. 2 nicht dargestellte Bypass 15 auch bei der USV 1 gemäß Fig. 2 vorhanden sein. Gemäß Fig. 2 ist die Steuerung 11 dazu vorgesehen, die Wandler 7, 8 und 10 neben dem Ladezustandssignal 14 abhängig von Strom- und Spannungswerten 18 am Netzanschluss 5 der USV 1 anzusteuern. Dabei berücksichtigt die Steuerung 11 Kennlinien, die die einzuspeisende Wirk- und Blindleistung und deren Vorzeichen abhängig von den Strom- und Spannungswerten 18 vorgeben. Zudem umfasst die USV 1 ein Notstromaggregat oder Genset aus einem Generator 19 und einer den Rotor des Generators antreibenden Brennkraftmaschine 20, hier einen Dieselmotor. Der Generator 19 ist ein Gleichstromgenerator und hier an den Gleichspannungszwischenkreis 9 angeschlossen. Es könnte aber auch ein Wechselspannungsgenerator sein, der direkt an den Lastausgang 6 angeschlossen ist. Die Steuerung 11 steuert den Generator 19 an, um ihn als Anlasser für die Brennkraftmaschine 20 zu betreiben, wenn das Notstromaggregat aktiviert werden muss. Die hierfür benötigte elektrische Aufstartenergie wird aus dem Gleichspannungszwischenkreis 9 und damit ebenfalls von dem Energiespeicher 4 bezogen. Sie muss in die Minimalenergie einkalkuliert werden, die in dem Energiespeicher 4 während der Bereitstellung von Regelleistung für das Stromnetzt 2 zurückgehalten wird, damit die USV 1 ihre Aufgabe der Absicherung der Last 3 zuverlässig erfüllen kann. Diese Absicherung besteht hier darin, dass die Last 3 dauerhaft mit elektrischer Leistung versorgt wird, die nach dessen Aufstarten von dem durch die Brennkraftmaschine 20 angetriebenen Generator 19 bereitgestellt wird.

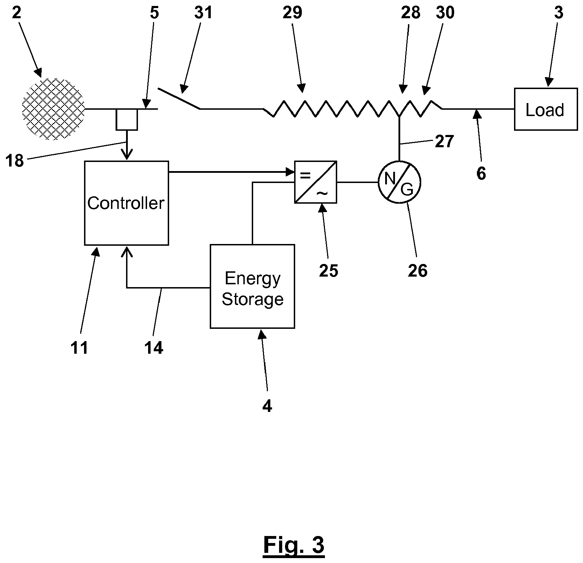

Die in **Fig. 3** dargestellte USV 1 ist im Gegensatz zu den USV 1 gemäß Fig. 1 und 2 nicht als statische, sondern als rotierende USV ausgebildet. Zwischen den Netzanschluss 5 und den Lastanschluss 6 ist eine Drossel 28 mit einem Netzanschluss-seitigen Trennschalter 31 in Reihe geschaltet. Die Drossel 28 weist einen Anzapf 27 auf, der die Drossel 28 in einen größeren Netzanschluss-seitigen Teil 29 und einen kleineren Lastanschluss-seitigen Teil 30 unterteilt. An den Anzapf 27 ist eine von zwei getrennten Wicklungen einer rotierenden elektrischen Maschine 26 angeschlossen. An die andere Wicklung der elektrischen Maschine 26 ist der Energiespeicher 4 über einen bidirektionalen DC/AC-Wandler 25 angeschlossen, der abhängig von dem Ladezustandsanzeigesignal 14 des Energiespeichers 4 und den Strom- und Spannungswerten 18 angesteuert wird, um über die rotierende elektrische Maschine 26 bei geschlossenem Trennschalter 31 Regelleistung für das Stromnetz 2 aus dem Energiespeicher bereitzustellen.

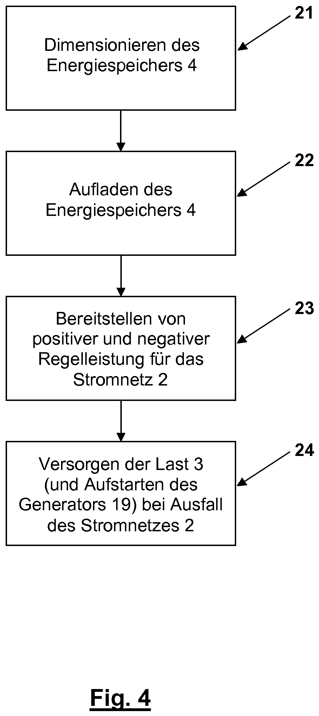

Das in **Fig. 4** dargestellte Blockdiagramm einer Ausführungsform des erfindungsgemäßen Verfahrens beginnt mit dem Dimensionieren 21 des Energiespeichers 4, so dass der Energiespeicher 4 die vorgegebene Minimalleistung abgeben kann und dies für mindestens dreimal so lange wie den vorgegebenen Mindestzeitraum für die abgesicherte Versorgung der Last 3 gemäß den Fig. 1 und 2. Beim Aufladen 21 wird der Energiespeicher auf eine Anfangsenergie aufgeladen, die bei der Hälfte der vorgegebenen Minimalenergie und der Maximalenergie des Energiespeichers 4 liegt. Dann kann beim Bereitstellen 22 von positiver und negativer Regelleistung für das Stromnetz 2 diese Regelleistung durch Entladen bzw. weiteres Aufladen des Energiespeichers 4 bezogen werden, und zwar bis die vorgegebene Minimalenergie nach unten bzw. die Maximalenergie des Energiespeichers 4 nach oben erreicht wird. Bei Ausfall des Stromnetzes 2 erfolgt ein Versorgen 23 der Last und ggf. ein Aufstarten des Generators 19 unter Entladen des Energiespeichers 4, und für dieses Versorgen wird in dem Energiespeicher 4 während des Bereitstellens 22 von Regelleistung die vorgegebene Minimalenergie zurückgehalten.

### BEZUGSZEICHENLISTE

- 1: USV
- 2: Stromnetz
- 3: Last
- 4: Energiespeicher
- 5: Netzanschluss
- 6: Lastanschluss
- 7: bidirektionaler AC/DC-Wandler
- 8: DC/AC-Wandler
- 9: Gleichspannungszwischenkreis
- 10: bidirektionaler DC/DC-Wandler
- 11: Steuerung
- 12: Regelleistungsanforderungssignal
- 13: Netzbetreiber
- 14: Ladezustandsanzeigesignal
- 15: Bypass
- 16: Trennschalter
- 17: Entkopplungsdrossel
- 18: Strom- und Spannungswerte
- 19: Generator
- 20: Brennkraftmaschine
- 21: Dimensionieren
- 22: Aufladen
- 23: Bereitstellen
- 24: Versorgen
- 25: DC/AC-Wandler
- 26: rotierende elektrische Maschine
- 27: Anzapf
- 28: Drossel
- 29: größerer Netzanschluss-seitiger Teil
- 30: kleinerer Netzanschluss-seitiger Teil
- 31: Trennschalter

## Patentansprüche

1. Verfahren zum Betreiben einer USV (1), die einen für viele Teilladungs-/-entladungszyklen ausgebildeten Energiespeicher (4) aufweist, mit den Schritten:
- Dimensionieren (21) des Energiespeichers (4) so, dass er zum Abgeben einer vorgegebenen elektrischen Mindestleistung geeignet ist,
- Schalten der USV (1) zwischen ein Stromnetz (2) und eine elektrische Last (3),
- Speichern von elektrischer Energie in dem Energiespeicher (4), wobei die in dem Energiespeicher (4) gespeicherte elektrische Energie mindestens so groß ist wie eine vorgegebene Minimalenergie, um eine elektrische Last (3) für einen vorgegebenen Mindestzeitraum mit der vorgegebenen elektrischen Mindestleistung zu versorgen, und
- Entladen des Energiespeichers (4) bei Ausfall des Stromnetzes (2), um die Last (3) mit elektrischer Leistung zu versorgen,
**dadurch gekennzeichnet,**
- **dass** der Energiespeicher (4) so dimensioniert wird, dass er zum Speichern einer Maximalenergie geeignet ist, die mindestens zweimal so groß ist wie die Minimalenergie,
- **dass** in dem Energiespeicher (4) eine Anfangsenergie gespeichert wird, die mindestens zweimal so groß ist wie die Minimalenergie, und
- **dass** der Energiespeicher (4) entladen wird, um positive Regelleistung für das Stromnetz (2) bereitzustellen,
- wobei der Energiespeicher beim Bereitstellen von positiver Regelleistung nicht unter die Minimalenergie entladen wird.

2. Verfahren nach Anspruch 1, **dadurch gekennzeichnet,**
- **dass** der Energiespeicher (4) so ausgebildet wird, dass er zum Speichern einer Maximalenergie geeignet ist, die mindestens dreimal so groß ist wie die Minimalenergie,
- **dass** in dem Energiespeicher (4) eine Anfangsenergie gespeichert wird, die kleiner ist als die Maximalenergie, und
- **dass** der Energiespeicher (4) aufgeladen wird, um negative Regelleistung für das Stromnetz (2) bereitzustellen,
- wobei der Energiespeicher (4) beim Bereitstellen von negativer Regelleistung nicht über die Maximalenergie aufgeladen wird.

3. Verfahren nach Anspruch 1 oder 2, **dadurch gekennzeichnet, dass** der Energiespeicher (4) beim Bereitstellen von positiver Regelleistung nicht unter eine Summe der Minimalenergie und einer Aufstartenergie entladen wird, wobei die Aufstartenergie zum Aufstarten einer zum Antreiben eines Generators der USV (1) ausgebildeten Brennkraftmaschine ausreichend ist.

4. Verfahren nach einem der Ansprüche 1 bis 3, **dadurch gekennzeichnet, dass** die Regelleistung abhängig von einem Regelleistungsanforderungssignal (12) eines Netzbetreibers (13) in das Stromnetz (2) eingespeist wird.

5. Verfahren nach einem der Ansprüche 1 bis 4, **dadurch gekennzeichnet, dass** die Regelleistung abhängig von Strom- und Spannungswerten (18) am Netzanschluss (5) der USV (1) an das Stromnetz (2) und von von einem Netzbetreiber (13) vorgegebenen Kennlinien in das Stromnetz (2) eingespeist wird.

6. USV (1) mit
- einem Netzanschluss (5),
- einem Lastanschluss (6),
- einem für viele Teilladungs-/-entladungszyklen ausgebildeten Energiespeicher (4) und
- einer Steuerung (11),
- wobei der Energiespeicher (4) so dimensioniert ist, dass er zum Abgeben einer vorgegebenen elektrischen Mindestleistung und zum Speichern einer Minimalenergie geeignet ist, um eine elektrische Last (3) für einen vorgegebenen Mindestzeitraum mit einer elektrischen Mindestleistung zu versorgen,
**dadurch gekennzeichnet,**
- **dass** der Energiespeicher (4) so dimensioniert ist (21), dass er zum Speichern einer Maximalenergie geeignet ist, die mindestens zweimal so groß ist wie die Minimalenergie, und
- **dass** die Steuerung (11) zur Bereitstellung von Regelleistung für ein an den Netzanschluss (5) angeschlossenes Stromnetz (2) gemäß dem Verfahrens nach einem der vorhergehenden Ansprüche ausgebildet ist.

7. USV (1) nach Anspruch 6, **dadurch gekennzeichnet, dass** der Energiespeicher (4) so ausgebildet ist, dass er zum Speichern einer Maximalenergie geeignet ist, die mindestens dreimal so groß ist wie die Minimalenergie.

8. USV (1) nach Anspruch 6 oder 7, **dadurch gekennzeichnet, dass** die Steuerung (11) einen Eingang aufweist, der zum Empfangen eines Regelleistungsanforderungssignals (12) eines Netzbetreibers (13) ausgebildet ist, wobei die Steuerung (11) dazu ausgebildet ist, die Regelleistung abhängig von dem Regelleistungsanforderungssignal (12) des Netzbetreibers(13) in das Stromnetz (2) einzuspeisen.

9. USV (1) nach einem der Ansprüche 6 bis 8, **dadurch gekennzeichnet, dass** Sensoren vorhanden sind, um Strom- und Spannungswerte des angeschlossenen Stromnetzes (2) an dem Netzanschluss (5) zu erfassen, wobei die Steuerung (11) dazu ausgebildet ist, die Regelleistung abhängig von den Strom- und Spannungswerten und von von einem Netzbetreiber (13) vorgegebenen Regelkennlinien in das Stromnetz (2) einzuspeisen.

10. USV (1) nach einem der Ansprüche 6 bis 9, **dadurch gekennzeichnet, dass** der Energiespeicher (4) über einen bidirektionalen DC/DC-Wandler (10) an einen Gleichspannungszwischenkreis (9) zwischen einem bidirektionalen Netzanschluss-seitigen AC/DC-Wandler (7) und einem Lastanschluss-seitigen DC/AC-Wandler (8) angeschlossen ist.

11. USV (1) nach einem der Ansprüche 6 bis 9, **dadurch gekennzeichnet, dass** der Energiespeicher (4) über einen bidirektionalen DC/AC-Wandler (25) an eine von zwei getrennten Wicklungen einer rotierenden elektrischen Maschine (26) angeschlossen ist, deren andere Wicklung an einen Anzapf (27) einer Drossel (28) mit einem Netzanschluss (5) und einem Lastanschluss (6) angeschlossen ist.

12. USV (1) nach einem der Ansprüche 6 bis 11, **dadurch gekennzeichnet, dass** der Energiespeicher (4) eine Lithiumionenbatterie aufweist.

13. USV (1) nach einem der Ansprüche 6 bis 12, **dadurch gekennzeichnet, dass** ein Generator (19) und eine zum Antreiben des Generators (19) ausgebildete Brennkraftmaschine (20) vorhanden sind.

14. USV (1) nach Anspruch 13, soweit direkt oder indirekt rückbezogen auf Anspruch 10, **dadurch gekennzeichnet, dass** der Generator (19) an den Gleichspannungszwischenkreis (9) oder direkt an den Lastanschluss (6) angeschlossen ist.
